# EUROPÄISCHE PATENTANMELDUNG

(11) **EP 2 295 764 A1**
(43) Veröffentlichungstag der Anmeldung: **16.03.2011**
(21) Anmeldenummer: 09168069.4
(22) Anmeldetag: 18.08.2009
(51) Int. Cl.: F02C 3/30, F02C 3/34, F01K 23/10

(54) **Verfahren zum Betrieb einer Kraftwerksanlage sowie Kraftwerksanlage**

(71) Anmelder: SIEMENS AKTIENGESELLSCHAFT, 80333 München (DE)
(72) Erfinder: Kliemke, Hardy, 45475 Mülheim/Ruhr (DE)

(57) **Zusammenfassung**

Die Erfindung betrifft ein Verfahren zum Betrieb einer Kraftwerksanlage (1), bei dem ein Brennstoff verdichtet wird, ein Oxidationsmittel verdichtet wird, Brennstoff und Oxidationsmittel zusammengeführt und verbrannt werden, Verbrennungsabgase entspannt und unter ihren Taupunkt abgekühlt werden, wobei der Brennstoff vor dem Verdichten und Verbrennen mit Wasser gemischt wird. Die Erfindung betrifft ferner eine Kraftwerksanlage zur Durchführung des Verfahrens.

## Beschreibung

### Beschreibung

Verfahren zum Betrieb einer Kraftwerksanlage sowie Kraftwerksanlage

Die Erfindung betrifft ein Verfahren zum Betrieb einer Kraftwerksanlage, sowie eine Kraftwerksanlage, insbesondere eine Gas- und Dampfturbinenanlage, und bezieht sich auf die bessere Nutzung der Verdampfungsenthalpie des im Abgas enthaltenen Wassers.

In einer Kraftwerksanlage mit einer Dampfturbine und einer Verbrennungskraftmaschine kann Wärme aus heißen Abgasen der Verbrennungskraftmaschine zum Betrieb der Dampfturbinenanlage genutzt werden. Ist die Verbrennungskraftmaschine eine Gasturbine und die Kraftwerksanlage dementsprechend eine GuD-Anlage (Gas- und Dampfturbinenanlage), so weist das aus der Gasturbine austretende, entspannte heiße Abgas typischerweise noch eine Temperatur von 500 bis 600°C auf. Zur Nutzung der in dieser Wärme enthaltenen Energie wird das Abgas einem der Gasturbinenanlage abgasseitg nachgeschalteten Abhitzedampferzeuger zugeführt, in dem Heizflächen in Form von Rohren oder Rohrbündeln angeordnet sind. Die Heizflächen sind wiederum in einen Wasser-Dampf-Kreislauf der Dampfturbinenanlage geschaltet, welche mindestens eine, zumeist jedoch mehrere Druckstufen aufweist. Die Druckstufen unterscheiden sich dadurch voneinander, dass das den Heizflächen zur Dampferzeugung zugeführte Wasser verschiedene Druckniveaus aufweist.

Bei der Verbrennung fossiler Brennstoffe, die Wasserstoff (H) und Kohlenstoff (C) enthalten, entsteht durch die Reaktion mit Luftsauerstoff (O₂) immer Wasserdampf (H₂O) und Kohlendioxid (CO₂). Der Wasserdampf im Abgas bindet Wärme, die bei konventionellen Anlagen ungenutzt mit dem Abgas abgeführt wird. Kühlt man das Abgas bis unter die Abgas-Taupunkttemperatur ab, kondensiert der Wasserdampf und die gebundene Wärme wird frei. Wann die Kondensation des Wasserdampfs im Abgas beginnt, hängt wesentlich von der Zusammensetzung des Brennstoffes ab, wobei das Potential zur Wirkungsgradsteigerung bei wasserstoffreichen Brennstoffen am größten ist.

Aufgabe der Erfindung ist es, ein Verfahren zum Betrieb einer solchen Kraftwerksanlage anzugeben, mit dem ein höherer Wirkungsgrad erreichbar ist. Eine weitere Aufgabe der Erfindung ist es, eine Kraftwerksanlage, insbesondere zur Durchführung des Verfahrens anzugeben.

Die erstgenannte Aufgabe wird erfindungsgemäß gelöst durch ein Verfahren zum Betrieb einer Kraftwerksanlage bei dem ein Brennstoff verdichtet wird, ein Oxidationsmittel verdichtet wird, Brennstoff und Oxidationsmittel zusammengeführt und verbrannt werden, Verbrennungsabgase entspannt und unter ihren Taupunkt abgekühlt werden, wobei der Brennstoff vor dem Verdichten und Verbrennen mit Wasser gemischt wird.

Indem das Wasser dem Brennstoff bereits vor der Verbrennung und nicht erst in der Brennkammer zugemischt wird, ergibt sich eine bessere Durchmischung und somit ein besserer Anlagenwirkungsgrad. Generell ermöglicht ein gezielt erhöhter Wasseranteil im Abgas von über 80 mol% eine effektivere Rückgewinnung der Verdampfungsenthalpie des Wassers.

Bevorzugt ist der Brennstoff einphasig flüssig und im Wesentlichen aus den Atomen C, H, und O aufgebaut. Weiterhin bevorzugt weist der Brennstoff eine hohe Wasserlöslichkeit auf.

Insbesondere bei der Verwendung von Alkohol und Wasser erfolgt aufgrund der bekannten Wasserstoffbrückenbindungen eine Mischung quasi von allein bis hinunter auf die molekulare Ebene. Diese intensive Vermischung führt beim Verbrennen zu dem wohl wichtigsten Vorteil überhaupt, der deutlichen Verringerung der Flammentemperatur, wodurch sich ein klarer Vorteil im Gasturbinen-Wirkungsgrad ergibt.

Vorzugsweise wird als Oxidationsmittel reiner Sauerstoff verwendet, was den im Abgas resultierenden Wasserpartialdruck weiter gezielt in die Höhe treibt.

Die Erfindung geht dabei von der Beobachtung aus, dass sich eine Kondensation des Wassers im Abgas infolge der Anhebung des Taupunkts durch die Wasser-Partialdruckerhöhung einfacher gestaltet und mehr nutzbare Wärme für einen nachgeschalteten Energieumwandlungsprozess dem Abgasstrom entnommen werden kann.

Dabei wird ein Teil des Kohlendioxids mit dem kondensierten Wasser aus dem Prozess entfernt und nicht in die Atmosphäre abgegeben. Der nicht kondensierte Abgasrest besteht beispielsweise bei Verwendung von Methanol als Brennstoff im Wesentlichen nur noch aus Kohlendioxid und kann direkt komprimiert und eingelagert werden.

Neben der Erhöhung des Wasserpartialdrucks im Abgas und der damit einhergehenden Taupunkterhöhung infolge der Verwendung reinen Sauerstoffs anstelle von Luft ergibt sich als weiterer Vorteil eine reduzierte Kompressionsarbeit bei der Bereitstellung des Oxidationsmittels für die Verbrennung sowie eine einfachere Weiterverarbeitung des Produktstroms, da ein kleineres Abgasvolumen anfällt.

Ferner kann die Wassereindüsung in die Brennkammer zur Regelung der zulässigen Abgashöchsttemperatur für die nachgeschaltete Turbine geringer ausfallen bzw. kann ggf. komplett entfallen.

Ein weiterer Vorteil der Erfindung liegt im Bereich des Energieaufwands für die Brennstoffproduktion. Jeder industrielle Herstellungsprozess von reinen Alkoholen beinhaltet eine Destillation, in der Wasser energieaufwendig abgetrennt wird, was hiermit teilweise eingespart werden kann.

Die auf eine Kraftwerksanlage gerichtete Aufgabe wird erfindungsgemäß gelöst durch eine Kraftwerksanlage, insbesondere zur Durchführung des oben beschriebenen Verfahrens, mit einer Brennkammer und einer in die Brennkammer mündenden Brennstoffleitung, wobei eine Wasserleitung an einer Zumischstelle in die Brennstoffleitung mündet.

Die Wasserleitung mündet dabei unmittelbar in die Brennstoffleitung oder zur besseren Durchmischung in eine in die Brennstoffleitung geschaltete Mischkammer an der Zumischstelle.

Vorteilhafter Weise zweigt die Brennstoffleitung von einer Brennstoff-Produktionseinrichtung für aus den Atomen C, H und O aufgebaute, wasserlösliche Brennstoffe ab.

Auf ebenso vorteilhafte Weise mündet eine Sauerstoffleitung in die Brennkammer, wobei die Sauerstoffleitung zweckmäßiger Weise von einer Luftzerlegungsanlage abzweigt.

Bei der Verwendung von Methanol als Brennstoff bzw. bei der Verwendung eines Methanol-Wasser-Gemischs ergibt sich für die Verbrennung folgende Gleichung:

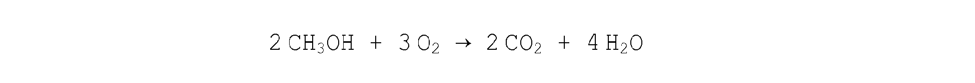

Der Abgasstrom enthält hauptsächlich Kohlendioxid und Wasser, wodurch eine Abgastrennung durch simple Kondensation ermöglicht wird.

Vorteilhafter Weise ist eine von der Turbine abzweigende Abgasleitung primärseitig in einen Wärmetauscher geschaltet, der sekundärseitig in einen Clausius-Rankine-Prozess geschaltet ist, wobei in den Clausius-Rankine-Prozess eine Dampfturbine geschaltet ist. Somit kann die im Abgas enthaltene Wärme in einem nachgeschalteten Dampfturbinenprozess weiter genutzt werden.

Zur Abgastrennung ist vorteilhafter Weise eine Phasentrenneinrichtung in die Abgasleitung in Strömungsrichtung des Abgases hinter den Wärmetauscher geschaltet.

In der Phasentrenneinrichtung abgeschiedenes Wasser wird in vorteilhafter Weise über eine Hauptkondensatleitung von der Phasentrenneinrichtung weggeführt und zum Teil im Prozess wieder verwendet, indem kondensiertes Wasser über eine von der Hauptkondensatleitung abzweigende Nebenkondensatleitung in die Wasserleitung zur Zumischstelle zurückgeführt wird.

Vorzugsweise ist in eine von der Phasentrenneinrichtung abzweigende Gasleitung ein Verdichter geschaltet dem in Strömungsrichtung des in der Phasentrenneinrichtung abgetrennten Gases ein Wärmetauscher nachgeschaltet ist. Nach dem durchströmen des Wärmetauschers liegt das im Abgas enthaltene Kohlendioxid in flüssiger Form vor und kann aus dem Prozess ausgeleitet werden. Im Gas verbliebener, nicht verbrannter Sauerstoff kann in die in die Brennkammer mündende Sauerstoffleitung zurückgespeist werden.

Die bei der Abkühlung des Kohlendioxids gewonnene Wärme kann beispielsweise einem weiteren Clausius-Rankine-Prozess mit Dampfturbine zugeführt werden. Vorzugsweise jedoch wird die im Wärmetausch mit dem Kohlendioxid gewonnene Wärme zur Brennstoffvorwärmung oder alternativ auch zum Betrieb der Luftzerlegungsanlage verwendet.

Die Erfindung wird beispielhaft anhand der Zeichnungen näher erläutert. Es zeigen schematisch und nicht maßstäblich:
- FIG 1: eine Kraftwerksanlage und
- FIG 2: eine alternative Ausgestaltung der Kraftwerksanlage gemäß FIG 1.

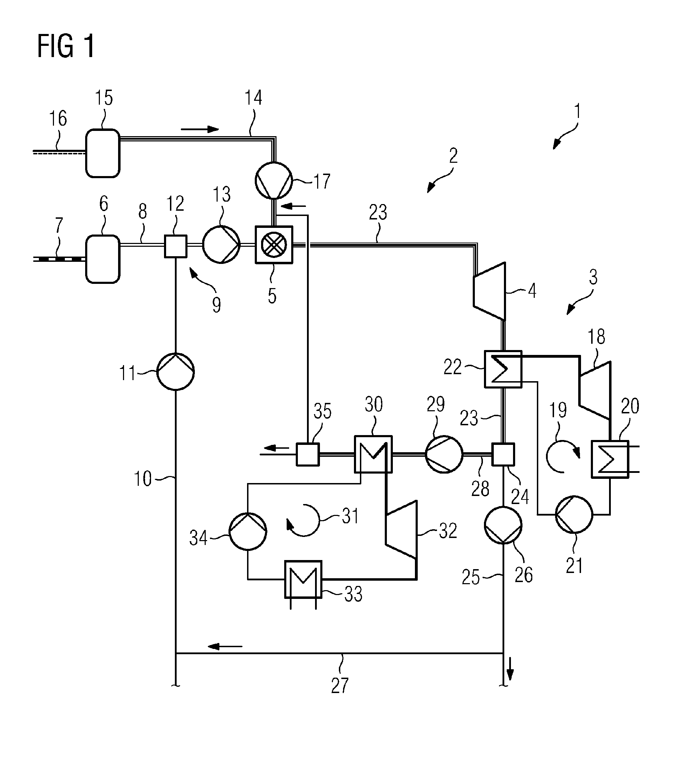

Die Kraftwerksanlage 1 gemäß der FIG 1 ist als Gas- und Dampfturbinenanlage ausgestaltet und umfasst eine Gasturbinenanlage 2 und eine Dampfturbinenanlage 3. Die Gasturbinenanlage 2 umfasst eine Turbine 4 und eine der Turbine 4 vorgeschaltete Brennkammer 5.

Zur Bereitstellung des für die Verbrennung benötigten Brennstoffs ist der Brennkammer 5 eine Einrichtung 6 zur Brennstoffherstellung vorgeschaltet, beispielsweise eine Einrichtung zur Produktion von Methanol. Als Rohstoffe für die Methanolherstellung können beispielsweise Erdgas oder Kohle 7 verwendet werden. Die Einrichtung 6 zur Brennstoffherstellung ist über eine Brennstoffleitung 8 mit der Brennkammer 5 verbunden.

An einer Zumischstelle 9 mündet eine Wasserleitung 10, in die eine Pumpe 11 geschaltet ist, unmittelbar oder über eine Mischkammer 12 in die Brennstoffleitung 8. Eine der Zumischstelle 9 in Strömungsrichtung des Brennstoffs nachgeschaltete Pumpe 13 fördert die Alkohol-Wasser-Mischung in die Brennkammer 5, wo sie mit einem Oxidationsmittel, vorzugsweise Sauerstoff, verbrannt wird.

Zur Bereitstellung des für die Verbrennung des Brennstoffs benötigten Sauerstoffs ist der Brennkammer 5 über eine Sauerstoffleitung 14 eine Luftzerlegungsanlage 15 vorgeschaltet. Die Luftzerlegungsanlage 15 ist eingangsseitig mit einem Luftstrom 16 beaufschlagbar. Ein Verdichter 17 ist in die Sauerstoffleitung 14 geschaltet.

Das Brennstoff-Wasser-Gemisch wird zusammen mit dem Sauerstoff in der Brennkammer 5 verbrannt und die heißen, unter Druck stehenden Abgase, werden der Turbine 4 zugeführt und dort unter Leistung von Arbeit entspannt.

Die Dampfturbinenanlage 3 umfasst eine Dampfturbine 18 und in einem Clausius-Rankine-Prozess 19 einen der Dampfturbine 18 nachgeschalteten Kondensator 20, eine Pumpe 21, sowie einen Wärmetauscher 22 bzw. Abhitzedampferzeuger.

Zum Zuführen von in der Turbine 4 entspanntem Abgas in den Wärmetauscher 22 ist eine Abgasleitung 23 zwischen Turbine 4 und Wärmetauscher 22 geschaltet.

In Strömungsrichtung des Abgases ist dem Wärmetauscher 22 eine Phasentrenneinrichtung 24 nachgeschaltet. Über eine Hauptkondensatleitung 25, in die eine Pumpe 26 geschaltet ist, wird Kondensat, d.h. Wasser, aus dem Abgas ausgeleitet, wobei eine Teilmenge des Kondensats über eine Nebenkondensatleitung 27 in die Wasserleitung 10 zurückgespeist wird, die in die Zumischstelle 9 mündet.

Der Restgasstrom des Abgases wird über eine von der Phasentrenneinrichtung 24 abzweigende Gasleitung 28, in die ein Verdichter 29 geschaltet ist, primärseitig einem Wärmetauscher 30 zugeführt, in den im Ausführungsbeispiel der FIG 1 sekundärseitig ein zweiter Clausius-Rankine-Prozess 31 mit Dampfturbine 32, Kondensator 33 und Pumpe 34 geschaltet ist.

Nach Durchlaufen des Wärmetauschers 30 liegt Kohlendioxid in flüssiger Phase vor. Nicht verbrannter Sauerstoff kann in einer Phasentrenneinrichtung 35, die dem Wärmetauscher 30 primärseitig nachgeschaltet ist, vom Kohlendioxid getrennt und in die Sauerstoffleitung 14 zurückgespeist werden.

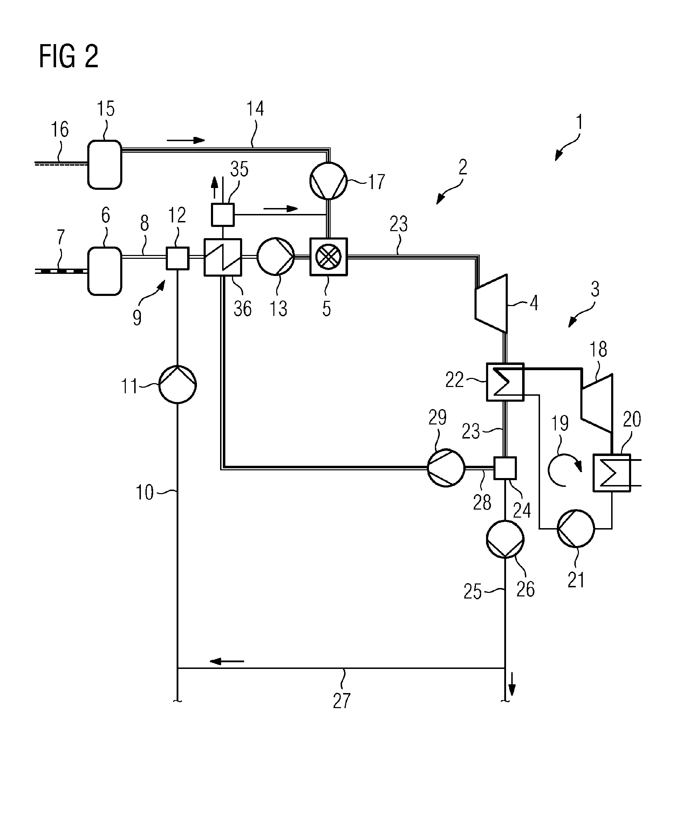

Ein alternatives Schaltungskonzept ist in FIG 2 beschrieben. Hier wird das von der Phasentrenneinrichtung 24 abgetrennte Restgas nach der Verdichtung 29 einem Wärmetauscher 36 zugeführt, um das Alkohol-Wasser-Gemisch in der Brennstoffleitung 8 vorzuwärmen, bevor, wie im ersten Ausführungsbeispiel der FIG 1, Kohlendioxid und Sauerstoff getrennt werden in der Phasentrenneinrichtung 35 und der Sauerstoff in die Sauerstoffleitung 14 zurück gespeist wird.

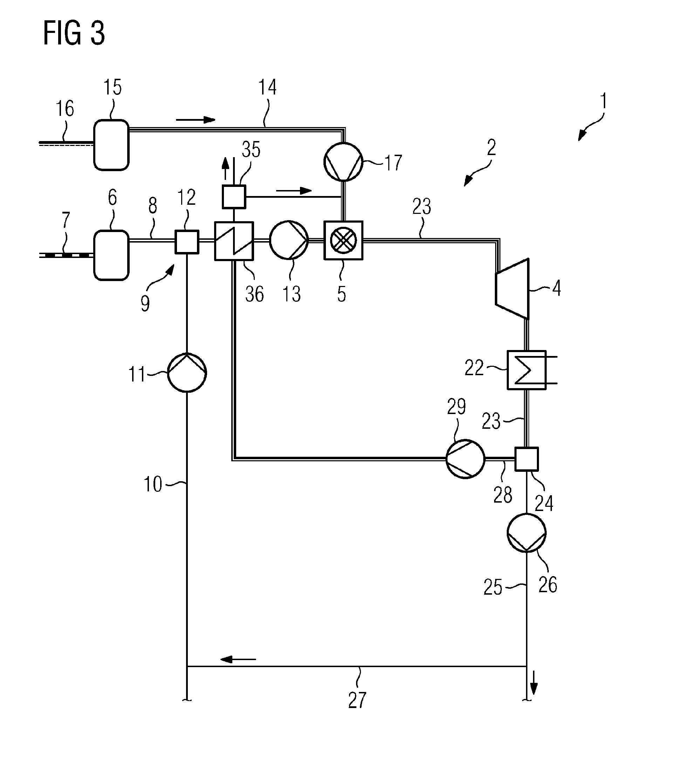

Die Erfindung bezieht sich nicht nur auf Anwendungen in Gas-und-Dampf-Kombikraftwerken, sondern kann auch, wie in FIG 3 gezeigt, im sogenannten Single-Cycle-Betrieb, dem reinen Gasturbinenbetrieb, vorteilhaft eingesetzt werden. Da das Abgas nicht direkt in die Atmosphäre abgegeben wird und in Strömungsrichtung des Abgases hinter dem Wärmetauscher 22, der als Kondensator fungiert, noch Verdichter bzw. Pumpen folgen, können die Abgase der Verbrennung in der Turbine bis zu Drücken unter 1 bar entspannt werden.

## Patentansprüche

1. Ein Verfahren zum Betrieb einer Kraftwerksanlage (1), bei dem ein Brennstoff verdichtet wird, ein Oxidationsmittel verdichtet wird, Brennstoff und Oxidationsmittel zusammengeführt und verbrannt werden, Verbrennungsabgase entspannt und unter ihren Taupunkt abgekühlt werden, **dadurch gekennzeichnet, dass** der Brennstoff vor dem Verdichten und Verbrennen mit Wasser gemischt wird.

2. Das Verfahren nach Anspruch 1, wobei der Brennstoff einphasig flüssig ist und im Wesentlichen aus den Atomen C, H, und O aufgebaut ist.

3. Das Verfahren nach Anspruch 1 oder 2, wobei als Oxidationsmittel reiner Sauerstoff verwendet wird.

4. Eine Kraftwerksanlage (1) umfassend eine Brennkammer (5) und eine in die Brennkammer (5) mündende Brennstoffleitung (8), **dadurch gekennzeichnet, dass** eine Wasserleitung (10) an einer Zumischstelle (9) in die Brennstoffleitung (8) mündet.

5. Die Kraftwerksanlage (1) nach Anspruch 4, wobei die Wasserleitung (10) unmittelbar in die Brennstoffleitung (8) mündet.

6. Die Kraftwerksanlage (1) nach Anspruch 4, wobei die Wasserleitung (10) in eine in die Brennstoffleitung (8) geschaltete Mischkammer (12) an der Zumischstelle (9) mündet.

7. Die Kraftwerksanlage (1) nach einem der Ansprüche 4 bis 6, wobei die Brennstoffleitung (8) von einer Einrichtung (6) zur Brennstoffherstellung für aus den Atomen C, H und O aufgebaute, wasserlösliche Brennstoffe abzweigt.

8. Die Kraftwerksanlage (1) nach einem der Ansprüche 4 bis 7, wobei eine Sauerstoffleitung (14) in die Brennkammer (5) mündet.

9. Die Kraftwerksanlage (1) nach Anspruch 8, wobei die Sauerstoffleitung (14) von einer Luftzerlegungsanlage (15) abzweigt.

10. Die Kraftwerksanlage (1) nach einem der Ansprüche 4 bis 9, wobei eine von einer Turbine (4) abzweigende Abgasleitung (23) primärseitig in einen Wärmetauscher (22) geschaltet ist, der sekundärseitig in einen Clausius-Rankine-Prozess (19) geschaltet ist.

11. Die Kraftwerksanlage (1) nach Anspruch 10, wobei in den Clausius-Rankine-Prozess (19) eine Dampfturbine (18) geschaltet ist.

12. Die Kraftwerksanlage (1) nach einem der Ansprüche 10 oder 11, wobei eine Phasentrenneinrichtung (24) in die Abgasleitung (23) in Strömungsrichtung des Abgases hinter den Wärmetauscher (22) geschaltet ist.

13. Die Kraftwerksanlage (1) nach Anspruch 12, wobei eine Hauptkondensatleitung (25) von der Phasentrenneinrichtung (24) abzweigt und eine von der Hauptkondensatleitung (25) abzweigende Nebenkondensatleitung (27) in die Wasserleitung (10) zur Zumischstelle (9) mündet.

14. Die Kraftwerksanlage (1) nach einem der Ansprüche 12 oder 13, wobei eine Gasleitung (28) von der Phasentrenneinrichtung (24) abzweigt und ein Verdichter (29) in die Gasleitung (28) geschaltet ist.

15. Die Kraftwerksanlage (1) nach Anspruch 14, wobei dem Verdichter (29) in Strömungsrichtung eines Gases ein Wärmetauscher (30,36) nachgeschaltet ist.
